# FASCICULE DE BREVET EUROPEEN

(11) **EP 0 524 049 B1**
(45) Date de publication et mention de la délivrance du brevet: **10.01.1996**
(21) Numéro de dépôt: 92401906.0
(22) Date de dépôt: 03.07.1992
(51) Int. Cl.: F16J 15/10, F24C 15/02

(54) **Joint d'étanchéité à rembourrage en non-tissé et procédé de fabrication**
Dichtung mit Füllvliesstoff und Herstellungsverfahren
Gasket with a filling of nonwoven and manufacturing process

(30) Priorité: 16.07.1991 FR 9109255
(43) Date de publication de la demande: 20.01.1993
(73) Titulaire: Centre Technique Industriel dit: INSTITUT TEXTILE DE FRANCE, F-92223 Bagneux Cédex (FR)
(72) Inventeur: Lyonnet, André, F-69005 Lyon (FR); Payot, François, F-69004 Lyon (FR)
(74) Mandataire: Hennion, Jean-Claude

(56) Documents cités:
- US-A- 4 156 533

## Description

La présente invention concerne un joint d'étanchéité longiforme, c'est à dire ayant une longueur importante par rapport à sa section transversale, et qui est composé d'au moins deux composants, l'un extérieur assurant la résistance physique et l'étanchéité proprement dite du joint et l'autre intérieur permettant sa compressibilité. La présente invention concerne également un procédé spécialement conçu pour la fabrication d'un tel joint.

On connaît ce type de joint, en particulier dans les fours de cuisson pour réaliser l'étanchéité et 1' isolation thermique de la porte du four.

Il est connu, dans ce cas, de réaliser le joint en une seule opération par tressage de l'enveloppe extérieure autour de l'élément intérieur, qui est un élément cylindrique en caoutchouc. L'utilisation du caoutchouc peut poser des difficultés pour certaines applications, en particulier lorsque le joint est soumis à de très hautes températures. D'autre part il est parfois souhaitable que les deux composants du joint soient dans la même matière.

Un joint d'étanchéité selon le préambule de la revendication 1 est connue du document US-A-4 156 533. Ce document indique également un procédé de fabrication d'un tel joint correspondant au préambule de la revendication 8. Le matériau de rembourrage de ce joint est composé principalement d'un matériau intumescent inorganique expansible, et contient également un agent fribreux de renforcement.

C'est l'objet de l'invention que de proposer un joint d'étanchéité du type précité à deux composants qui présente des propriétés mécaniques de compressibilité améliorées.

Il s'agit d'un joint longiforme d'étanchéité composé d'une enveloppe extérieure garnie d'au moins un élément de rembourrage, l'enveloppe extérieure étant une gaine textile, caractérisé en ce que l'élément de rembourrage consiste en une bande étroite de non-tissé ayant une épaisseur moyenne d'au moins 5 mm.

Ainsi le non-tissé donne au joint les propriétés mécaniques de compressibilité dont il a besoin, et de plus les fibres constitutives du non-tissé peuvent être dans la même matière que la gaine textile constituant l'enveloppe extérieure.

Cette gaine textile peut être une gaine tissée; de préférence il s'agit d'une gaine tressée, qui ne présente pas de discontinuité longitudinale comme dans le cas du tissage double face.

Selon une version particulière de l'invention, le joint longiforme d'étanchéité a, en section transversale, une forme asymétrique qui lui est conférée en tout ou partie par la forme de la bande de non-tissé. Cette disposition permet l'adaptation du joint à la géométrie des éléments pour lequel il assure l'étanchéité.

Par exemple le joint a, en section transversale, sensiblement la forme d'un trapèze rectangle dont tous les angles sont arrondis.

Le joint selon l'invention devant notamment résister à de hautes températures, la gaine textile et le non-tissé sont à base de fibres de céramique.

C'est un autre objet de l'invention que de proposer un procédé spécialement conçu pour la fabrication du joint longiforme d'étanchéité précitée à rembourrage en non-tissé.

Ce procédé selon lequel on enfile un élément de rembourrage à l'intérieur d'une tresse, se caractérise par les étapes suivantes :
a. on place l'élément de rembourrage constitué d'une bande étroite de non-tissé ayant une épaisseur moyenne d'au moins 5 mm et une longueur déterminée entre deux plaques supports,
b. on déforme transversalement la tresse en sorte d'augmenter temporairement son diamètre intérieur,
c. on enfile les deux plaques et la bande de non-tissé à l'intérieur de la tresse,
d. on retire l'une après l'autre les deux plaques
e. et on déforme longitudinalement la tresse en sorte qu'elle épouse le contour de la bande de non-tissé.

Ce procédé, purement manuel ou éventuellement semi-automatique, convient parfaitement à la réalisation de joint d'étanchéité de longueur réduite, de l'ordre du mètre.

De préférence il comporte une étape complémentaire qui consiste à préformer la tresse rembourrée avec la bande de non-tissé selon la géométrie requise pour le joint. Cette étape ultime permet de donner à l'ensemble tresse/bande de non-tissé la forme appropriée du joint, cette forme étant le plus souvent très proche de celle de la bande de non-tissé.

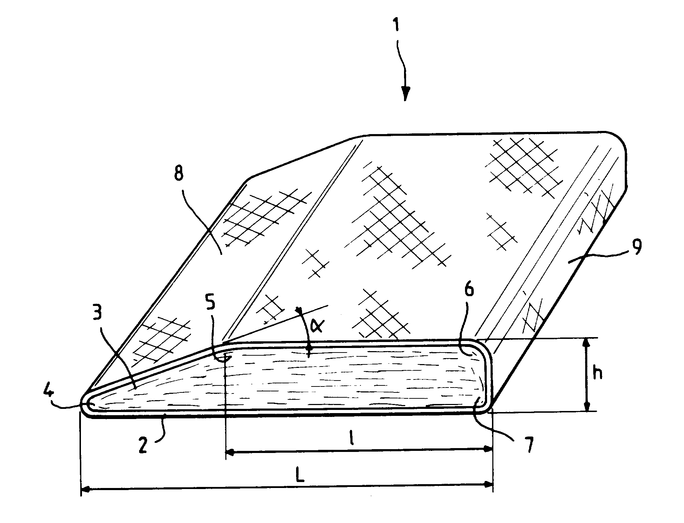

L'invention sera mieux comprise à la lecture de la description qui va être faite d'un exemple de fabrication d'un joint longiforme d'étanchéité à rembourrage en non-tissé illustré par le dessin annexé dans lequel la figure unique est une vue schématique en perspective d'un joint ayant, en section transversale, la forme d'un trapèze rectangle à angles arrondis.

La figure montre clairement un type de joint 1 selon l'invention, qui est constitué d'une enveloppe extérieure qui est une tresse 2 et d'un élément intérieur de rembourrage qui est une bande de non-tissé 3.

Globalement le joint 1 a sensiblement la forme d'un trapèze rectangle dont les quatre angles 4 à 7 sont arrondis. Cette structure particulière est obtenue grâce au fait d'une part que la bande non tissée 3 a elle-même, avant insertion dans la tresse 2, la forme sensiblement d'un trapèze rectangle et d'autre part que la tresse 2 entoure sous une certaine tension la bande de non-tissé 3 de sorte que les fibres constitutives du non-tissé sont légèrement comprimées au niveau des angles 4 à 7.

Dans un exemple précis de réalisation, la longueur L de la grande base du trapèze était de l'ordre de 50 mm, celle l de la petite base de l'ordre de 32 mm, la hauteur h de l'ordre de 9 mm, l'angle α au sommet de l'ordre de 20°. La tresse 2 de même que la bande de non-tissé 3 étaient réalisées à base de fibres de céramique. Le joint 1 convenait parfaitement pour assurer l'étanchéité dans un environnement à très haute température, entre des éléments dont la configuration et la disposition nécessitaient un joint ayant la forme décrite ci-dessus.

Il est à noter que la bande de non-tissé, qui confère au joint les propriétés de compressibilité, présente avantageusement une densité de fibres qui est sensiblement uniforme dans tout le volume du joint. Cette disposition particulière permet d'avoir une bonne homogénéité du joint dans toute sa longueur L. Cela ne serait pas le cas si la partie en biseau 8 du joint 1 était obtenue par compression localisée d'une bande de non-tissé de section rectangulaire.

En effet la densité de fibres serait alors beaucoup plus importante vers l'angle aigu 4 et la compressibilité du joint vers cette zone serait moindre que celle dans la zone d'épaisseur constante h.

Cette uniformité de densité peut être obtenue éventuellement par découpe en biseau d'une bande de section rectangulaire.

Elle peut de préférence être obtenue en mettant à profit une irrégularité que le demandeur a constaté lors de la fabrication du non-tissé. Cette irrégularité consiste en une diminution progressive du nombre de fibres à l'approche des lisières dans le voile fibreux en sortie de carde, spécialement lorsque l'alimentation en fibres est réalisée sur une largeur limitée de la carde. En superposant les voiles de carde unitaires on accentue cette irrégularité au point de pouvoir obtenir une épaisseur décroissante, dans la section transversale. Après aiguilletage des voiles unitaires superposés, le non-tissé obtenu conserve cette forme particulière. On obtient la bande de non-tissé apte au joint 1 de l'invention en effectuant au moins une découpe longitudinale correspondant au flanc latéral 9 du joint, et éventuellement une seconde découpe longitudinale le long de la lisière pour obtenir un bord régulier.

La superposition des voiles unitaires, en sortie de carde, est par exemple réalisée par enroulement sur un tambour cylindrique dont la surface est avantageusement revêtue d'un velours, apte à l'accrochage temporaire des fibres. Pour une épaisseur h de l'ordre du centimètre, on a superposé 35 voiles unitaires de fibres de céramique. La bande de non-tissé, longue de 120 cm, faisait alors de l'ordre de 40 g.

L' aiguilletage a été réalisé dans les conditions suivantes : 200 coups/mn, pénétration des aiguilles 10 mm, densité de 27 coups/cm2.

La tresse 2 a été réalisée à partir de filés de fibres de céramique de 66 tex, sur une tresseuse équipée de 96 fuseaux , chaque fuseau comportant 4 fils : l'angle de tressage était de l'ordre de 45°, le diamètre de la tresse, au repos, était de l'ordre de 37 mm.

L'insertion de la bande de non-tissé dans la tresse 2 est obtenue selon le mode opératoire suivant. On place de part et d'autre de la bande 3 deux plaques rigides de faible épaisseur, ayant sensiblement la même largeur et la même longueur que la bande elle-même. On prend une tresse 2 de longueur appropriée à la bande, que l'on déforme transversalement en lui donnant une certaine extension en sorte d'augmenter temporairement le diamètre intérieur de la tresse 2. On enfile dans la tresse ainsi déformée les deux plaques et la bande, jusqu'à dépassement à l'autre extrémité de la tresse. On retire une première plaque par coulissement, tout en maintenant l'autre plaque contre la tresse, puis la seconde. Enfin on déforme longitudinalement la tresse en lui donnant une certaine tension longitudinale en sorte de l'allonger et de la plaquer sur tout le contour extérieur de la bande.

De préférence la tresse rembourrée est ensuite soumise à un préformage, dans une préforme dont la configuration et les dimensions intérieures correspondent à celles qui sont recherchées pour le joint.

Cette opération supplémentaire permet de corriger les éventuelles déformations qui auraient pu apparaître lors des opérations précédentes.

L'invention n'est pas limitée au mode réalisation qui a été décrit à titre d'exemple non exhaustif. En particulier, la bande de non-tissé n'a pas obligatoirement une forme asymétrique comme celle décrite ci-dessus, mais peut avoir une forme géométrique simple, carrée ou rectangulaire. Dans ce cas, l'insertion continue de la bande de non-tissé dans la tresse au cours du tressage pourrait être envisagée.

De plus la bande de non-tissé peut n'être pas le seul élément de rembourrage à l'intérieur de la gaine textile.

## Revendications

1. Joint longiforme d'étanchéité, composé d'une enveloppe extérieure garnie d'au moins un élément de rembourrage, l'enveloppe extérieure étant une gaine textile (2), caractérisée en ce que l'élément de rembourrage consiste en une bande (3) étroite de non-tissé ayant une épaisseur moyenne d'au moins 5 mn.

2. Joint selon la revendication 1 caractérisé en ce que la gaine textile est une tresse.

3. Joint selon l'une des revendications 1 ou 2 caractérisé en ce qu'il a, en section transversale, une forme asymétrique qui lui est conférée en tout ou partie par la forme de la bande de non-tissé.

4. Joint selon la revendication 3 caractérisé en ce qu'il a, en section transversale, sensiblement la forme d'un trapèze rectangle dont tous les angles sont arrondis.

5. Joint selon l'une des revendications 3 ou 4 caractérisé en ce que la bande de non-tissé (3) a sensiblement la même densité de fibres dans tout son volume.

6. Joint selon la revendication 1 caractérisé en ce que la gaine textile (2) et la bande de non-tissé (3) sont à base du même matériau fibreux.

7. Joint selon la revendication 6 résistant à haute température, caractérisé en ce que la gaine textile (2) et la bande de non-tissé (3) sont à base de fibres de céramique.

8. Procédé de fabrication d'un joint longiforme d'étanchéité selon la revendication 1, selon lequel on enfile un élément de rembourrage à l'intérieur d'une tresse, caractérisé par les étapes suivantes :
a. on place l'élément de rembourrage constitué d'une bande étroite de non-tissé ayant une épaisseur moyenne d'au moins 5 mm et une longueur déterminée entre deux plaques supports,
b. on déforme transversalement la tresse en sorte d'augmenter temporairement son diamètre intérieur,
c. on enfile les deux plaques et la bande de non-tissé à l'intérieur de la tresse,
d. on retire l'une après l'autre les deux plaques
e. et on déforme longitudinalement la tresse en sorte qu'elle épouse le contour de la bande de non-tissé.

9. Procédé selon la revendication 8 caractérisé en qu'il comporte une étape complémentaire qui consiste à préformer la tresse rembourrée avec la bande de non-tissé selon la géométrie requise pour le joint.

## Patentansprüche

1. Längliche Dichtung, die aus einer Außenhülle besteht und mit mindestens einem Füllmaterial verstärkt ist, wobei die Außenhülle eine Textilhülle (2) ist, dadurch gekennzeichnet, daß das Füllmaterial aus einem schmalen Band (3) aus nichtgewebtem Stoff besteht und eine durchschnittliche Stärke von mindestens 5 mm hat.

2. Dichtung nach Anspruch 1, dadurch gekennzeichnet, daß die Textilhülle ein Geflecht ist.

3. Dichtung nach einem der Ansprüche 1 oder 2, dadurch gekennzeichnet, daß sie im Querschnitt eine asymmetrische Form aufweist, die ihr ganz oder teilweise durch die Form des Bands aus nichtgewebtem Stoff gegeben wird.

4. Dichtung nach Anspruch 3, dadurch gekennzeichnet, daß sie im Querschnitt im wesentlichen die Form eines rechtwinkligen Trapezes hat, deren Winkel alle abgerundet sind.

5. Dichtung nach einem der Ansprüche 3 oder 4, dadurch gekennzeichnet, daß das Band aus nichtgewebtem Stoff (3) in seinem ganzen Volumen im wesentlichen die gleiche Faserdichte hat.

6. Dichtung nach Anspruch 1, dadurch gekennzeichnet, daß die Textilhülle (2) und das Band aus nichtgewebtem Stoff (3) auf der Grundlage des gleichen Fasermaterials hergestellt sind.

7. Dichtung nach Anspruch 6, die hochtemperaturbeständig ist, dadurch gekennzeichnet, daß die Textilhülle (2) und das Band aus nichtgewebtem Stoff (3) auf der Grundlage von Keramikfasern hergestellt sind.

8. Herstellungsverfahren für einen länglichen Dichtring nach Anspruch 1, nach dem man in ein Geflecht ein Füllmaterial einzieht, gekennzeichnet durch folgende Schritte:
a) man positioniert das Füllmaterial, das aus einem schmalen Band aus nichtgewebtem Stoff besteht und eine mittlere Stärke von mindestens 5 mm und eine bestimmte Länge hat, zwischen zwei Trägerplatten,
b) man verformt das Geflecht transversal, um vorübergehend seinen Innendurchmesser zu erhöhen,
c) man zieht die beiden Trägerplatten des Bands und das Band aus nichtgewebtem Stoff in das Geflecht ein,
d) man zieht die beiden Platten nacheinander heraus
e) und man verformt das Geflecht der Länge nach, so daß es die Form des Bands aus nichtgewebtem Stoff annimmt.

9. Verfahren nach Anspruch 8, dadurch gekennzeichnet, daß es einen zusätzlichen Schritt umfaßt, der darin besteht, das mit dem Band aus nichtgewebtem Stoff gefüllte Geflecht nach der für die Dichtung erforderlichen Geometrie vorzuformen.

## Claims

1. Longiform gasket, composed of an outer envelope stuffed with at least one stuffing element, the outer envelope being a textile sheath (2), characterized in that the stuffing element consists of a narrow non-woven web (3) having a mean thickness of at least 5 mm.

2. Gasket according to claim 1, characterized in that the textile sheath is a braid.

3. Gasket according to one of claims 1 or 2, characterized in that, in cross section, it presents an asymmetrical shape which is given to it, wholly or partly, by the shape of the non-woven web.

4. Gasket according to claim 3, characterized in that, in cross section, it is substantially in the form of a right-angled trapezium of which all the angles are rounded.

5. Gasket according to one of claims 3 or 4, characterized in that the non-woven web (3) has substantially the same fiber density in the whole of its volume.

6. Gasket according to claim 1, characterized in that the textile sheath (2) and the non-woven web (3) are based on the same fibrous material.

7. Gasket according to claim 6, resistant to high temperature, characterized in that the textile sheath (2) and the non-woven web (3) are based on ceramic fibers.

8. Process for manufacturing a longiform gasket according to claim 1, according to which a stuffing element is threaded into a braid, characterized in that it comprises the following steps of :
a. placing the stuffing element constituted of a narrow non-woven web, having a mean thickness of at least 5mm and a determined length, between two support plates,
b. transversely deforming the braid so as temporarily to increase its inner diameter,
c. inserting the two plates and the non-woven web inside the braid,
d. withdrawing the two plates one after the other,
e. and longitudinally deforming the braid so that it follows the contour of the non-woven web.

9. Process according to claim 8, characterized in that it comprises a complementary step consisting in preforming the braid stuffed with the non-woven web, in accordance with the geometry required for the gasket.
